## Europäisches Patentamt
## European Patent Office
## Office européen des brevets

(19)

(11) Publication number: **0 059 020**
A1

# EUROPEAN PATENT APPLICATION

(12)

(21) Application number: 82200205.1

(22) Date of filing: 22.02.82

(51) Int. Cl.³: **B 09 B 5/00**

(30) Priority: 23.02.81 NL 8100879

(43) Date of publication of application: 01.09.82
Bulletin 82/35

(84) Designated Contracting States: **AT BE CH DE FR GB IT LI LU NL SE**

(71) Applicant: **NEDERLANDSE CENTRALE ORGANISATIE VOOR TOEGEPAST-NATUURWETENSCHAPPELIJK ONDERZOEK, Juliana van Stolberglaan 148, NL-2595 CL The Hague (NL)**

(72) Inventor: **ter Meulen, Berend Philippus, Cornelis Hendrixstraat 90, NL-7371 AV Loenen (Gld) (NL)**

(74) Representative: **Lobatto, Jacob Louis, Drs., Octrooi- en Merkenbureau Lobatto Postbus 1017 Pastoor Buyslaan 40, NL-2242 RL Wassenaar (NL)**

(54) Method for removing undesired components from the soil.

(57) A method for removing undesired components from the soil by extracting said soil with a suitable extraction agent after screening off from the adjacent soil and optionally also the underlying soil. Extraction agent is introduced by means of supply conduit (8) and tube (9), extending through the contaminated layer (4), and outlet filters (10) and rises from there to the ground level (5). Screening (1) extends from surface layer (2) into waterimpervious layer (3).

Method for removing undesired components from the soil.

The invention relates to a method for removing undesired components from the soil.More specifically the invention relates to a method for removing undesired components, such as toxic components, from the soil by extraction with a suitable extraction agent.

For a long time little or no attention has been paid to the consequences of dumping industrial waste, whether or not in special designated areas.In recent decades increasing attention has been paid to the consequences of industrial pollution.In that respect attention was paid in the first place to the pollution of surface waters, such as rivers ( in particular the Rhine), lakes, such as the Great Lakes in the U.S.A., and also oceans and seas, for which pollution by oil is the predominant problem.Of more recent date is the attention for pollution of the soil by undesired components.Such components, which usually are poisonous for certain plants and/or animals, have been tackled in a number of different ways, but none of the methods proposed hitherto has provided an attractive solution of the problem from the viewpoint of costs and logistics..

The most common method hitherto consists of digging off and digging out the polluted soil, which subsequently is dumped in an area designed or that purpose, or is treated.Usually this requires transportation of large volumes of soil over relatively long distances, in as far the contaminated soil is concerned, as well as the supply of "clean" soil for refilling the hole thus formed, which also involves transportation of large volumes, though the distance may be relatively small under favourable conditions.

Another method consists of the immobilisation of the undesired components of the waste in the soil. As an example may be mentioned chemical bonding of heavy metals with chelate-forming ionexchanging resins, such as described in Dutch Patent Application No. 7508582, thus preventing that the heavy metals will still exert a toxic action. Such heavy metals may also be bonded with a mercapto-s-triazine, such as a mono-, di- or trimercapto-s-triazine, by adding that as such or in the form of a watersoluble salt to the soil, such as is described in Dutch Patent Application No. 7211368. In these cases, as mentioned, the impurities remain in the soil, be it, that in the bonded state, into which they have been converted, they are no longer or at least to a much lesser extent detrimental.

In addition many methods are known for introducing all kinds of materials into the soil, in particular fertilizers and other growth-promoting materials, as well as agents for preventing or combating diseases and soil reinforcing means, but the removal of undesired components from the soil can not be derived from this state of the art.

The present invention relates to a method by which the disadvantages as mentioned above can be avoided or at least be substantially mitigated. The invention relates to a method for removing undesired components from the soil by extracting the contaminated soil with a suita-ble solvent for the relevant components while screening from at least the adjacent soil, and the extract thus formed is removed in a manner known as such. Thus hori-zontal spreading of the undesired components is preven-ted. Depending on the structure of the soil and the le-vel of the groundwater, it may be desirable to install a horizontal screening with respect to the underlying soil in order to prevent vertical spreading towards the groundwater.With a view to the costs involved in the transportation of soil it is to be preferred that the soil is treated locally.However, if desired it is also possible to transfer the contaminated soil to a, preferably nearby, area, similarly screened off from the adjacent soil and if necessary also the underlying soil.Such an area will usually be in the shape of hole having dimensions suitable for the amount of contaminated soil, such that the contaminated soil in total, or subdivided in two or more portions, can be treated therein, or subdivided over a number of such areas.

By screening off the contaminated soil from adjacent soil, and if desired also underlying soil, it is prevented that the contaminating components may diffuse into the adjacent, and possibly also the underlying soil, whereafter the removal of the contaminating components, depending on their character, may be carried out in a period of time adjusted to the circumstances, and wherein, if desired, the start of this treatment may be deferred for a considerable time.

The screening required for the method according to the invention has to be completely, or at least substantially impervious for the components to be removed as well as the extraction agent or the extraction agents to be used.Such a screening may for example consist of a damwall, which can serve as such for many years.If desired the damwall may also be provided with a draining system at the exterior for collecting and removing any water and/or other extraction agent possibly oozing through the damwall.If desired the damwall may also be provided with a lining of a suitable foil, inert under the prevailing conditions.Such a lining may be fitted onto the inside and/or the outside of a damwall.Instead of a damwall of the customary U-shaped plates, a clay-screen of customary composition, for example on a basis of bentonite, may also, and preferably, be applied. Such a wall will harden at the spot and turns completely impervious to water.Such clay walls may be installed by first making a groove of the desired width, for example 10 cm, followed by filling in of the groove with the selected clay mixture.

The sideways screening should extend beyond the lower level of the contaminated soil.Usually this requires a side-wall down to a depth of 10 - 15 m below the ground level.

When the conditions do not exclude the risk of oozing into the groundwater, it may be desirable to insert a horizontal screening as well.Such a horizontally extending screening may also be formed from a suitable clay mixture according to methods known as such.Instead such a horizontally extending screening may also be formed by freezing, such as described for example in Civil Engineering, December 1977, p.53 ff.In this context it should be observed that the vertical screening may be formed by freezing as well.It will be understood that on applying freezing of soil for the formation of the complete screening or part thereof, the amount of cooling applied should be such, that the screening thus formed by freezing will not show essential interruptions during the complete treatment of the contaminated soil, as otherwise the screening function would get lost at least in part.As for the cooling considerable energy is required in order to maintain the frozen condition, as well as supervision to ascertain a proper functioning thereof, a static screening, not requiring supervision, is preferable.

After screening off the contaminated soil from the adjacent soil in the amnner as described above, and if desired also from the underlying soil, the extraction according to the invention is carried out.Depending on the type of undesired components suitable extraction agents for these may be used.As examples of extraction agents that can be used in the method according to the invention may be mentioned aqueous and organic solvents, such as water ( if desired with decreased or increased pH), alcohols, such as for example ethanol or butanol, mixtures of alcohol and water, and petroleum ether.Depending on the type of extractant and the type of contaminant the presence of a surface-active agent may favourably affect the extraction.In selecting the extraction agent to be used it is of importance that the relevant extraction agent can be removed from the treated soil in an easy way and completely or at least substantially completely, or if the latter is not possible, will exert no detrimental action in the purified soil.

The relevant extraction agent can be introduced onto and/or into the contaminated soil in any suitable manner such as for example by sprinkling and/or by injecting. Depending on the type of extraction agent used, it will either drain into the contaminated soil towards the lower layers and be sucked off from there by way of outlet ports intended for that purpose, such as for example by means of pumps, or the extraction agent with the contaminants dissolved therein will rise towards the discharge means located above the contaminated soil under the influence of the suction action of the pumps.In the first case the extraction agent is supplied above the contaminated soil, either by sprinkling or by injecting into a layer above the contaminated soil, or even into the contaminated soil, whereas in the second case the extraction agent is injected into a layer below the contaminated soil and if desired also in part into the latter. In order to be able to bring about the intended extraction, it is a suitable embodiment to install sources or wells in the contaminated area for every 5 to 10 $m^2$, each having a length of 5 - 10 m, depending on the permeability of the soil. If the extraction is carried out by irrigating with a suitable extraction agent, water together with extract is withdrawn from the soil by means of the wells in a lower located layer. In the other case extraction agent is pressed into the soil by means of the sources. Subsequently the extraction agent rises towards the surface of the soil and is pumped away from there for further treatment.

If volatile extraction agents are used it is advisable to cover the surface to be treated with a material impervious for the vapour of the extraction agent, in order that as little as possible of the extraction agent is lost by evaporation.

If the soil is impervious the contaminants will be closely below the surface or even at the surface, and will not penetrate into the soil any deeper. For such cases the contaminants may be removed easiest by removal of a relatively thin surface layer. However this will be required only in a limited number of cases as the contamination is in a fixed position and the danger of spreading is thus negligible. If however the soil is permeable the contaminants may penetrate fairly deep into the soil. Removal of the contaminants by digging off in such a case requires such a massive soil transportation however, that such a solution is very expensive, the more so as the hole thus created by digging off will have to be filled in with soil, that has to be supplied from elsewhere. It is in particular for permeable soil that the invention provides a method providing a substantial saving in costs in comparison with the known methods.

The period of time of the extraction of the contaminated soil is not critical as the screening, provided it
is not effected by freezing, is static in type and will
remain stable for many years without supervision.The
extraction as such, once started, can be continued for
any length of time with very limited supervision.Thus
for example in the case of a poisonous contamination,
present in a concentration above the allowed maximum
limit, the aim will be to lower the concentration to
a level below the said limit within a short period of
time.Thefurther removal of the contamination may then
be deferred until some later moment in time, or if desired be carried out at a much slower rate.

The extract obtained with the method according to the
invention may, after being collected, if desired be
treated according to a physical or chemical method known
as such.This may consist for example in the treatment
with a suitable absorption agent, whereafter the extraction agent may be recirculated for reuse.Thus activated
carbon may for example suitable be used as absorption
agent for an aqueous extract.The extraction agent may
also be evaporated in a known manner and be recovered by
condensation for reuse.The contaminant thus remaining,
or the contaminant concentrated on the absorption agent,
may then be destroyed in a manner known as such, optionally after prior regeneration, or be converteded into
other useful products.Thus for example many metals, which
can be isolated for example by flocculation at a high pH
may be used as such or after further treatment for colouring of decorative tiles and floortiles.Possible for-
mation of canalisation in the soil to be extracted can
be compensated by installation of an extra well or source
at the location of such a canalisation.

The invention is further elucidated on the basis of the accompanying drawings, wherein two embodiments are shown.

Fig.1 is a vertical cross-section of a screened off section of contaminated soil with surrounding soil, with sources;
Fig.2 is a horizontal cross-section of Fig.1 at the level of the outlet-filters, shown therein;
Fig.3 is a vertical cross-section of the screened off section of contaminated soil with surrounding soil, with wells;
Fig.4 is a horizontal cross-section of Fig.3 at the level of the wells, shown therein.

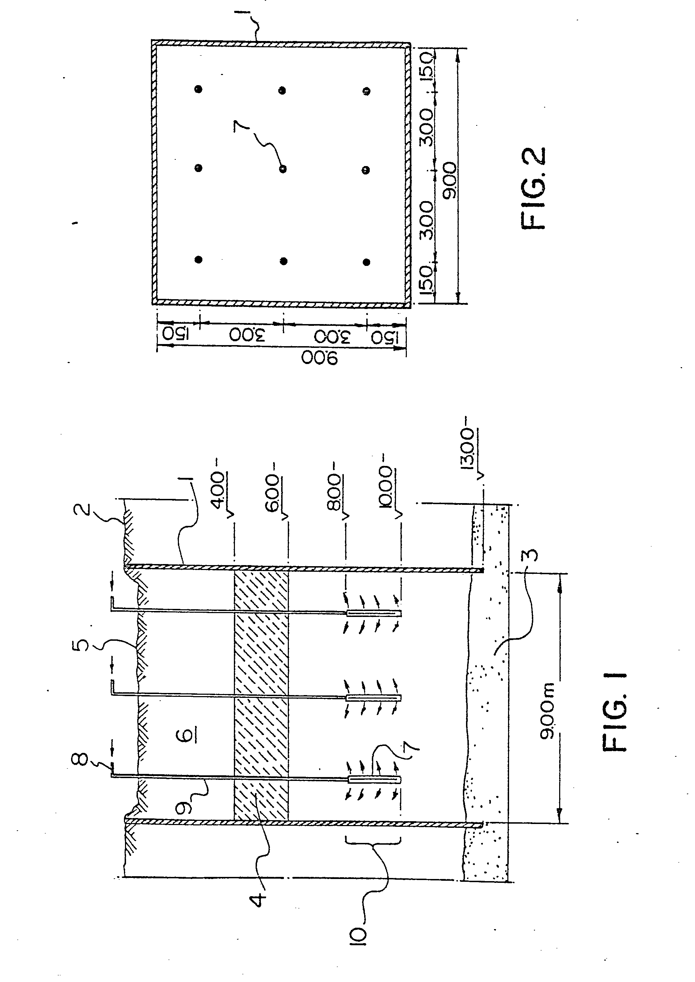

In Fig.1 an embodiment is shown, wherein a waterimpervious screening 1 extends vertically from the surface level 2 down into a waterimpervious layer 3 around the contaminated layer 4, which is to be extracted.Within the waterimpervious screening 1 the top soil has been removed from the surface level 2 down to the upper ground level 5.Within the space 6, thus confined, sources 7 have been installed at a suitable mutual distance, consisting of a supply conduit 8, extending vertically through the contaminated layer 4 as tube 9, which is provided at its end with outlet filters 10.In the embodiment shown, the contaminated layer is from 4 to 6 m below the surface level, the outlet filters are 8 to 10 m below the surface level, the diameter of the contaminated layer 4 is about 9 m and the horizontal waterimpervious layer 3 is at about 13 m.The desired extraction agent is introduced into the soil under pressure by means of supply conduit 8 and the outlet filters, whereafter the extraction agent emerges at the top and may be reused by pumping off and purifying.The sources are at a mutual distance of 3 m, heart to heart, the total volume of extraction agent introduced amounts to 100 - 500 $1/m^2$/day at an overpres-

sure of 2 - 3 m water pressure.This method is in particular suitable if the contaminants are lighter than water.

Fig.2 shows how the waterimpervious screening 1 has been laid out and how the sources 7 have been located with respect to this screening and with respect to each other.

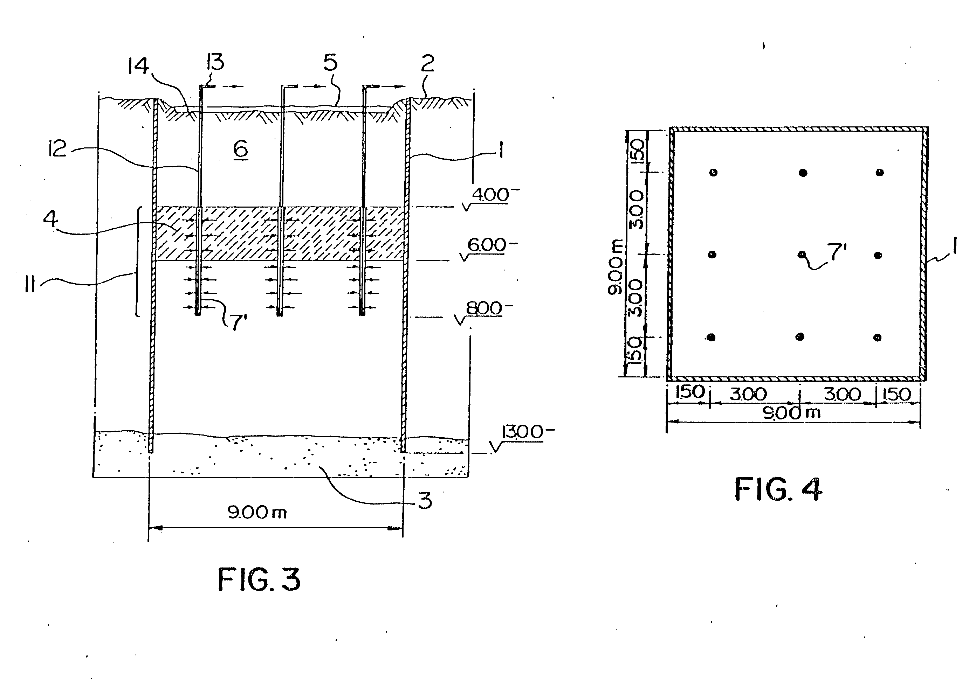

Fig.3 shows a reverse path of the extraction agent with a similar waterimpervious screening 1, surface level 2, waterimpervious layer 3, contaminated layer 4 and upper ground level 5.Within the space 6, thus confined, wells 7' have been installed at a suitable mutual distance, consisting of suction filters 11, rising tube 12 and outlet tube 13, which is connected with a pump (not shown).In the embodiment shown the contaminated layer is from 4 to 6 m below the surface level, the suction filters are 4 to 8 m below the surface level, the diameter of the contaminated layer 4 is about 9 m and the horizontal waterimpervious layer 3 is at about 13 m below the surface level.The extraction agent 14 is applied to the upper ground layer 5 as irrigation, descends into the underlying soil and is discharged, together with the contaminants dissolved therein, by means of the suction filters 11 and is further treated in a similar manner as described for the embodiment of Fig.1.The wells are at a mutual distance of 3 m, heart to heart, and the total volume of extraction agent amounts to 100 - 500 $1/m^2$/day. This embodiment has the advantage that a possible rise of the groundwater in the area to be purified can be repressed.

Fig.4 shows how the waterimpervious screening 1 in Fig.3 has been laid out and how the wells 7' have been located with respect to the screening and with respect to each with respect to this screening and with respect to each other.

It will be obvious, that the purification as described hereinabove if desired may also be carried out by transferring the contaminated soil into a hole of suitable dimensions, which is provided with the screening as described above and wells or sources. In view of the necessary soil transports this method will be applied only if this is desirable or necessary as a consequence of particular local conditions.

= = = = = = = = =

CLAIMS:

1. A method for removing undesired components from the soil, wherein the soil thus contaminated, is extracted with an extracting agent suitable for the undesired components after screening off from the adjacent soil, and the extract thus obtained is discharged in a manner known as such.

2. A method according to claim 1, wherein the contaminated soil is simultaneously screened off from the underlying soil.

3. A method according to claim 1 or 2, wherein the side-long screening extends to 10 - 15 m below the surface level.

4. A method according to one or more of the preceding claims, wherein the extracting agent is injected at a level below the lower level of the contaminated soil and is discharged from the surface of the soil.

5. A method according to any one of claims 1 - 3, wherein the extraction agent is applied onto the surface of the soil by sprinkling and is sucked off at a level below the lower level of the contaminated soil.

6. A method according one or more of the preceding claims, wherein the extract is purified by a physical or chemical method, known as such, and the purified extraction agent thus obtained is recirculated.

7. A method according to any one of the preceding claims, wherein the extraction agent consists of water, optionally with a decreased or increased pH, ethanol, butanol, a mixture of ethanol and water, or petroleum ether.

0059020

8. A method according to one or more of the preceding claims, wherein the inside and/or outside of the screening is lined with a completely covering, inert material.

9. A method according to one or more of claims 1 - 7, wherein the exterior of the screening is provided with a draining system.

10. A method according to any one of the preceding claims, wherein the volume of the extracting agent amounts to 100 - 500 $1/m^2$/day.

= = = = =

**FIG. I**

**FIG. 2**

0059020

FIG. 3

FIG. 4

0059020

European Patent Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| A | US - A - 4 105 252 (F. MOORE)<br>* The whole document * | 1 |
| A | NL - A - 77 05 831 (AQUATECHNIQUE SIERRE)<br>& US - A - 4 167 973 | |
| A | US - A - 4 183 407 (L. KNOPIK) | |
| A | US - A - 2 818 240 (C.W. LIVINGSTON) | |
| A | US. - A - 1 690 446 (F. GRANT et al.) | |
| A | US. - A - 2 884 742 (M. MOORE et al.) | |
| A | NL - A - 79 09 014 (J.M. LEAL UREN)<br>& GB - A - 2 047 669 | |

**CLASSIFICATION OF THE APPLICATION (Int. Cl. 3)**

B 09 B 5/00

**TECHNICAL FIELDS SEARCHED (Int.Cl. 3)**

B 09 B
E 21 B
E 02 D
B 08 B
E 02 F
A 01 G

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| The Hague | 01-06-1982 | LAVAL |

EPO Form 1503.1 06.78